# EUROPÄISCHE PATENTANMELDUNG

(11) **EP 1 094 000 A2**
(43) Veröffentlichungstag der Anmeldung: **25.04.2001**
(21) Anmeldenummer: 00122063.1
(22) Anmeldetag: 11.10.2000
(51) Int. Cl.: B64C 31/028, F42B 10/56, B64D 17/02

(54) **Gleitschirm zum Transport einer Last**

(30) Priorität: 19.10.1999 DE 29918364 U
(71) Anmelder: Diehl Munitionssysteme GmbH & Co. KG, 90552 Röthenbach (DE)
(72) Erfinder: Schleicher, Ulrich, Dr., 91217 Hersbruck (DE)
(74) Vertreter: Hofmann, Gerhard, Dipl.-Ing. Patentassessor

(57) **Zusammenfassung**

Ein Gleitschirm als universeller Lastenträger weist in einem Behälter eine Steuereinrichtung auf, die über Steuerleinen die Konfiguration des Gleitschirms beeinflußt. Der Behälter (2) ist wenigstens zweigeteilt. Im oberen Teil (13) sind gleitschirmseitige Komponenten angeordnet, wie Energieversorgung, Antriebsaggregat, Autopilot, Aktuatoren für Steuerleinen, Navigationsmittel, Sender und Empfänger. In einem unteren Teil (23) ist eine Nutzlast bzw. eine absetzbare Nutzlast angeordnet.

## Beschreibung

Die Erfindung bezieht sich auf einen Gleitschirm zum Transport einer Last nach dem Oberbegriff des Anspruchs 1.

Ein Gleitschirm als Lastenträger ist aus der EP 0 433 159 A1 bekannt. Zur Bekämpfung eines gepanzerten Fahrzeugs bzw. zur Aufklärung von feindlichen Fahrzeugen hängt an Fangleinen eine Steuereinrichtung für die Fluglage des Gleitschirms und eine Explosivladung bzw. eine Kamera.

Die Aufgabe der Erfindung ist es, einen Gleitschirm als universellen Lastenträger auszubilden.

Die Erfindung löst diese Aufgabe entsprechend den kennzeichnenden Merkmalen des Anspruchs 1. Vorteilhafte Weiterbildungen sind den Unteransprüchen zu entnehmen.

Ausführungsbeispiele der Erfindung sind in der Zeichnung dargestellt. Es zeigen:
- Fig. 1: einen Gleitschirm mit einem Behälter,
- Fig. 2, 3: eine Einzelheit des Behälters nach Fig. 1 in einer Seitenansicht und in einem Schnitt III - III nach Fig. 2,
- Fig. 4, 5: einen Schließmechanismus,
- Fig. 6: ein Spannband,
- Fig. 7-9: einen Spannverschluß,
- Fig. 10: eine Verriegelung für den Behälter nach Fig. 1,
- Fig. 11: einen weiteren Verschluß und
- Fig. 12-15: Behälter mit verschiedenen Öffnungsarten des unteren Teils des Nutzlastbehälters.

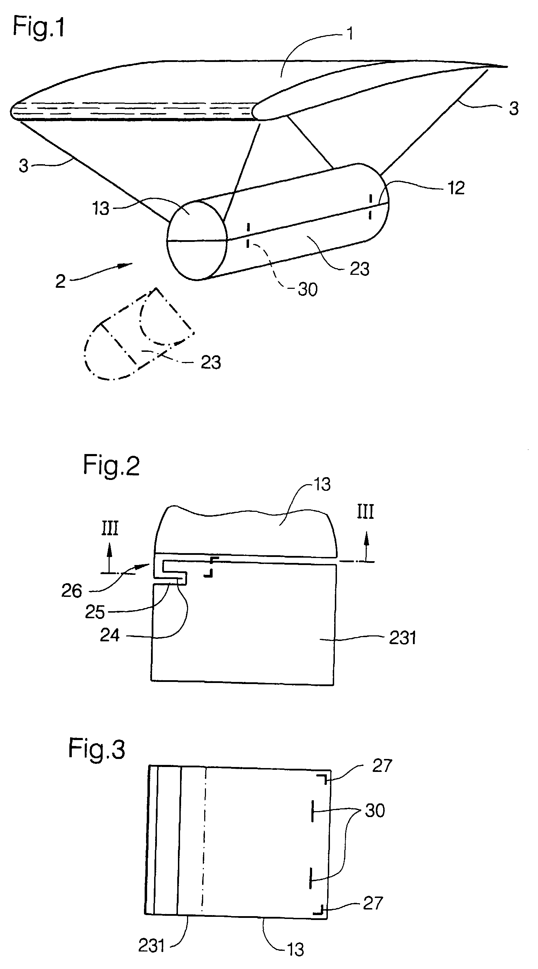

Entsprechend Fig. 1 ist ein Gleitschirm 1 mit einem Behälter 2 im Flug dargestellt. In bekannter Weise ist der Behälter 2 über nicht näher bezeichnete Fang- und Steuerleinen 3 mit dem Gleitschirm 1 verbunden.

Der Behälter 2 ist zweigeteilt und besitzt eine längs verlaufende Trennfuge 12. Der Behälter 2 kann auch mehrteilig also drei- oder vierteilig ausgebildet sein. Dabei kommt es nicht auf die vorgenannte Trennfuge an. Diese kann sowohl in Längsrichtung als auch quer dazu verlaufen, sowie stufenförmig oder gebogen sein oder eine sonstige Ausbildung aufweisen.
Wesentlich ist jedoch, daß in einem oberen Teil 13 die für das Fluggerät spezifischen Komponenten, wie Autopilot, Aktuatoren für Steuerleinen, Navigationsmittel, Sender und Empfänger, Antriebsmotor, Energieversorgung und weiteres angeordnet bzw. mit diesem verbunden sind. Demgegenüber ist ein unterer Teil 23, 231 als Nutzlastträger für zivile und/oder militärische Lasten vorgesehen. Der untere Teil 23, 231 ist ablösbar.

Lösbare Verbindungen zwischen dem oberen Teil 13 und dem unteren Teil 23, 231 sind nachfolgend beschrieben.

Nach den Fig. 2 und 3 weist der obere Teil 13 einen L-förmigen Winkel 24 auf, der in eine entsprechende U-förmige Ausnehmung 25 des Teiles 23 eingreift. Die Fixierung 26 liegt gegenüber Führungswinkeln 27, die zusammen mit der Fixierung 26 für einen sicheren Halt des unteren Teiles 231 am oberen Teil 13 sorgen. Symbolisch gezeichnete Verschlüsse sind mit 30 bezeichnet. Diese Verschlüsse 30 können als elektromagnetisch bewegte Bolzen ausgebildet sein, die in die Führungswinkel 27 einschnappen.

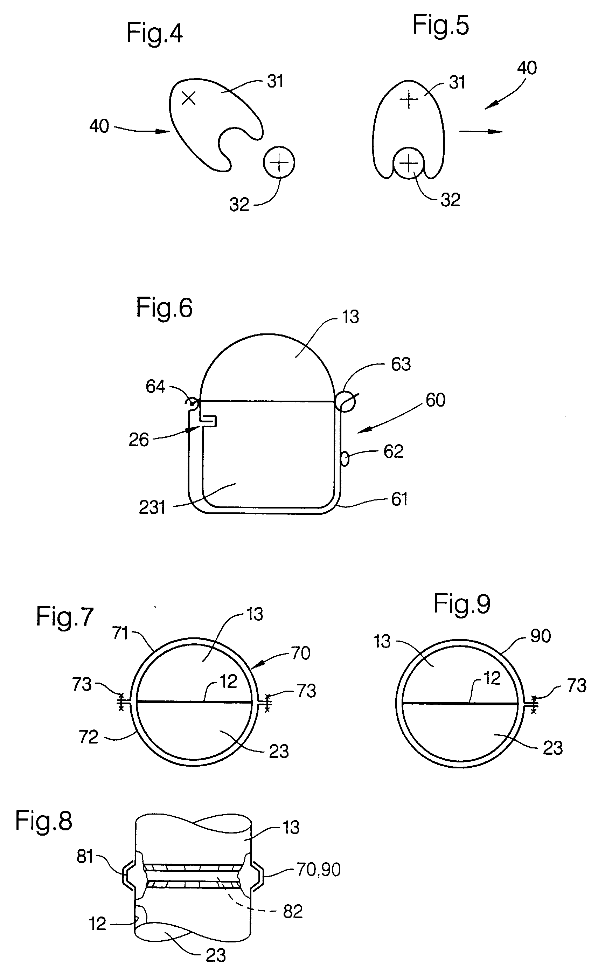

Entsprechend Fig. 4 besteht ein Verschluß 40 aus einem am Teil 13 schwenkbar angeordneten Raster 31 und einem am Unterteil 231 angeordneten Bolzen 32. Fig. 4 zeigt die geöffnete Situation, während Fig. 5 die geschlossene darstellt.

Wesentlich ist, daß der Verschluß, wie bei einer Autotür, die beiden Teile in der Schließstellung gegeneinander preßt.

Der Verschluß 40 kann auch als zwei gegenläufige Bajonettverschlüsse ausgebildet sein. Am unteren Teil 23 wäre der feste Verschlußteil angeordnet wahrend am oberen Teil 13 die elektromagnetisch betätigbaren Teile gelagert sind.

Ein weiterer Verschluß 60 - Fig. 6 - besteht aus einem Spannband 61 mit Spannschloß 62 und aus einer auslösbaren Elektroklinke 63. Das Spannband 61 ist an einen Bolzen 64 am oberen Teil 13 eingehakt. Die Fixierung 26 und Winkel 27 gemäß den Fig. 2 und 3 fixieren den unteren Teil 231 in Bezug auf den oberen Teil 13.

Nach den Fig. 7 bis 9 halten Verschlüsse 70 bzw. 90 den unteren Teil 23 am oberen Teil 13. Die Verschlüsse 70 bzw. 90 liegen an jeweils einem konischen Bund 81, 82 des oberen Teiles 13 und des unteren Teiles 23 an. Die beiden Teile 71, 72 des Verschlusses 70 sind über Befestigungselemente 73 miteinander verbunden. Nach Fig. 7 ist der Verschluß zweiteilig ausgebildet. Nach Fig. 9 ist der Verschluß 90 einteilig.

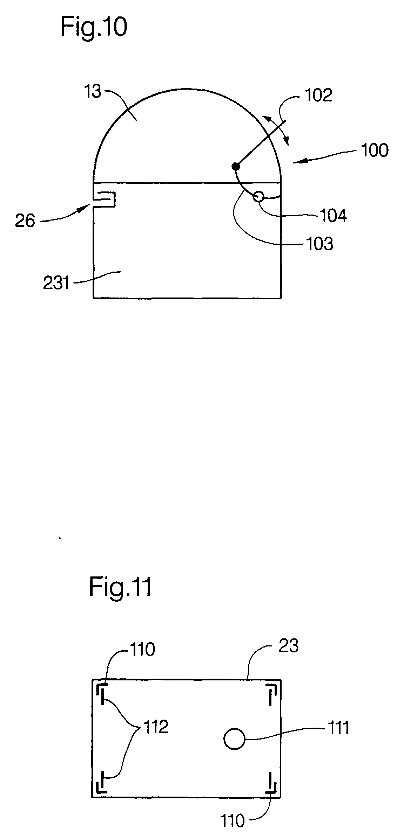

Nach Fig. 10 ist der untere Teil 231 am oberen Teil 13 an einer Seite durch die Fixierung 26 gehalten, während gegenüberliegend schwenkbare Hebelverriegelungen 100 am oberen Teil 13 gelagert sind. Die Hebelverriegelung 100 besteht aus einem Betätigungsarm 102 und aus einem gebogenen Fanghebel 103. Der Fanghebel 103 greift in eine Öse 104 des unteren Teiles 231 ein und preßt die beiden Teile 23, 231 aneinander.

Nach Fig. 11 sind am oberen Teil 13 (nicht gezeichnet) vier überstehende Metallwinkel 110 angeordnet. Diese führen den von unten aufsteckbaren unteren Teil 23. Der untere Teil 23 weist elektromagnetische Riegelbolzen 112 auf. Diese rasten zur Befestigung des unteren Teiles 23 am oberen Teil 13 in entsprechende Löcher oder Nocken an den Metallwinkeln 110 ein. Ein Stecker 111 für Signalleitungen der entsprechenden Lastkomponenten und zur Stromversorgung der Riegelbolzen 112 liegt in der Ebene der Trennfuge 12. Diese Steckverbindung löst sich selbsttätig beim Ablösen des unteren Teiles 23 vom oberen Teil 13.

Statt der Metallwinkel 110 können auch konische bzw. kegelige Führungselemente genommen werden.

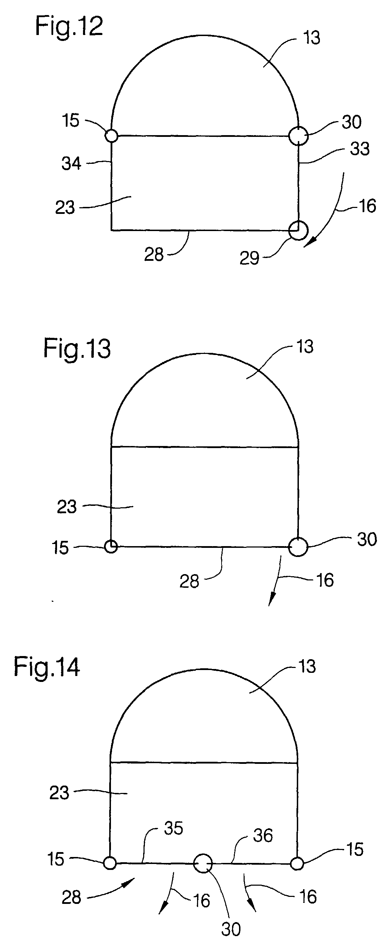

Nach Fig. 12 ist der untere Teil 23 am oberen Teil durch ein Schwenklager 15 gelagert und durch den Verschluß 30 gehalten. Der Pfeil 16 zeigt die Schwenkrichtung.

Dabei kann zusätzlich ein Verschluß 29 am Boden 28 angeordnet sein. Bei separat geöffneten Verschlüssen 29, 30 fliegt ein Seitenteil 33, beispw. federgetrieben, weg.

Wird nur der Verschluß 29 geöffnet, so schwenken nur das Seitenteil 34 mit dem Boden 28 in Richtung des Pfeiles 16.

Nach Fig. 13 öffnet nur der Boden 28 in Richtung des Pfeiles 16. Der Boden 28 ist einseitig gelagert.

Nach Fig. 14 ist der Boden 28 als zweifache Klappe 35, 36 ausgebildet. Der Verschluß 30 liegt mittig und ist an der Klappe 36 befestigt. Die Klappen 35, 36 öffnen schachtförmig und schwenken um die Schwenklager 15.

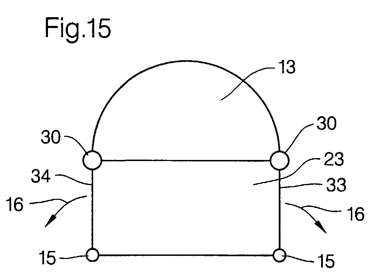

Nach Fig. 15 sind die Seitenteile 33, 34 in den Pfeilrichtungen 16 klappbar.

Anstelle der elektromagnetisch betätigbaren Klinken, Bolzen können auch pyrotechnische Elemente, wie Cutter, Trennschrauben eingesetzt werden.

Die Verschlüsse 30, 40, 60, 70, 90 sind nachspannend. Beim Schließen der Verschlüsse 30, 40, 60, 70, 90 werden die Teile 13, 23 des Behälters 13 aneinander gepreßt.

## Patentansprüche

1. Gleitschirm zum Transport einer Last in einem Behälter mit Fangleinen zwischen dem Gleitschirm und dem Behälter, wobei in dem Behälter eine Steuereinrichtung angeordnet ist, die über Steuerleinen die Konfiguration des Gleitschirms beeinflußt,
dadurch gekennzeichnet,
daß der Behälter (2) wenigstens zweigeteilt ist,
im oberen Teil (13) gleitschirmseitige Komponenten angeordnet sind, wie Energieversorgung, An-triebsaggregat, Autopilot, Aktuatoren für Steuerleinen, Navigationsmittel, Sender und Empfänger,
in einem unteren Teil (23) eine Nutzlast bzw. eine absetzbare Nutzlast angeordnet ist.

2. Gleitschirm nach Anspruch 1,
dadurch gekennzeichnet,
daß der untere Teil (23) durch auslösbare Verschlüsse (30) vom oberen Teil (13) ablösbar ist.

3. Gleitschirm nach Anspruch 1,
dadurch gekennzeichnet,
daß der obere Teil (13) mit dem unteren Teil (23) durch wenigstens ein Schwenklager (15) und wenigstens einen Verschluß (30) verbunden ist.

4. Gleitschirm nach Anspruch 1,
dadurch gekennzeichnet,
daß am unteren Teil (23) wenigstens ein Schwenklager (15) und wenigstens ein Verschluß (30) vorgesehen sind.

5. Gleitschirm nach Anspruch 1,
dadurch gekennzeichnet,
daß am oberen Teil (13) wenigstens ein Verschluß (30) zur Halterung wenigstens eines schwenkbaren oder ablösbaren Bauteiles (33, 34) des unteren Teiles (13) befestigt ist.

6. Gleitschirm nach Anspruch 1,
dadurch gekennzeichnet,
daß die Verschlüsse (30) zeitgesteuert, höhenabhängig oder funkgesteuert sind.

7. Gleitschirm nach Anspruch 1,
dadurch gekennzeichnet,
daß die Verschlüsse aus einer Falle, wie Bolzen (32) und Schloß (31), einem Spannband (61) mit auslösbarer Elektroklinke (63) oder aus einer Hebelverriegelung (100) mit Öse (104) bestehen.

8. Gleitschirm nach Anspruch 1,
dadurch gekennzeichnet,
daß die Verschlüsse (30, 40, 60, 70, 90, 100, 110, 112) elektrisch, pyrotechnisch oder chemisch antreibbar sind.
